# EUROPÄISCHE PATENTANMELDUNG

(11) **EP 3 276 996 A1**
(43) Veröffentlichungstag der Anmeldung: **31.01.2018**
(21) Anmeldenummer: 16181916.4
(22) Anmeldetag: 29.07.2016
(51) Int. Cl.: H04W 8/20

(54) **WEITERLEITUNGSSERVER**

(71) Anmelder: Deutsche Telekom AG, 53113 Bonn (DE)
(72) Erfinder: SEIFERT, Olaf, 27308 Kirchlinteln (DE)
(74) Vertreter: Patentship Patentanwaltsgesellschaft mbH

(57) **Zusammenfassung**

Die vorliegende Erfindung betrifft einen Weiterleitungsserver (100) zur Handhabung einer Profilanfrage nach einem Kommunikationsprofil für ein elektronisches Teilnehmeridentifikationsmodul (101) eines mobilen Kommunikationsgerätes (103) für die Kommunikation über ein Kommunikationsnetzwerk, mit: einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Identifikationsmoduls (101) aufweist; einem Prozessor (107), welcher ausgebildet ist, auf der Basis der Profilanfrage eine Kommunikationspräferenz eines Benutzers des mobilen Kommunikationsgerätes zu bestimmen und einen ausgewählten Profilserver (105-1, 105-2) aus einer Mehrzahl von Profilservern (105-1, 105-2) mit Kommunikationsprofilen auszuwählen, welcher ein elektronisches Kommunikationsprofil für die Kommunikationspräferenz bereitstellt; und wobei die Kommunikationsschnittstelle (105) ausgebildet ist, die empfangene Profilanfrage an den ausgewählten Profilserver (105-1, 105-2) weiterzuleiten.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines Mobilfunknetzwerkbetreibers.

Üblicherweise wird das elektronische Kommunikationsprofil durch ein mobiles Kommunikationsgerät, beispielsweise ein Smartphone, von einem Profilserver, beispielsweise von einem SMDP+-Profilserver abgerufen und für das elektronische Teilnehmeridentifikationsmodul aktiviert.

Die Auswahl des Profilservers wird üblicherweise durch einen Discovery-Server vorgenommen, welcher in der Regel durch das initiale Bootstrapping-Profil des elektronischen Teilnehmeridentifikationsmoduls zuerst mit der Profilanfrage adressiert wird und als Antwort auf die Profilanfrage eine URI des Profilservers zurück an das mobile Kommunikationsgerät übermittelt.

Die Zuordnung des elektronischen Kommunikationsprofils zu einem Benutzer des mobilen Kommunikationsgerätes erfolgt in der Regel durch einen Vertrag zwischen einem Netzwerkbetreiber und einem Benutzer. Dadurch können jedoch automatisch keine weiteren elektronischen Kommunikationsprofile, welche beispielsweise anderen Netzwerkbetreibern oder Anbietern von Kommunikationsdiensten zugeordnet sind, berücksichtigt werden.

Es ist die Aufgabe der Erfindung, ein Konzept zur Zurverfügungstellung von elektronischen Kommunikationsprofile unterschiedlicher Anbieter von Kommunikationsdiensten automatisch berücksichtigt werden.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch einen Weiterleitungsserver gelöst werden kann, welcher im Unterschied zu einem Discovery-Server einen Profilserver mit beispielsweise dem günstigsten Preis oder der größten Netzabdeckung automatisch auswählt und die Anfrage an den ausgewählten Profilserver automatisch weiterleitet. Die URI des ausgewählten Profilservers wird im weiteren Unterschied zu einem Discovery-Server nicht an das mobile Kommunikationsgerät weitergesendet.

Gemäß einem ersten Aspekt betrifft die Erfindung einen Weiterleitungsserver zur Handhabung einer Profilanfrage nach einem Kommunikationsprofil für ein elektronisches Teilnehmeridentifikationsmodul eines mobilen Kommunikationsgerätes für die Kommunikation über ein Kommunikationsnetzwerk, mit: einer Kommunikationsschnittstelle zum Empfangen einer Profilanfrage nach dem Kommunikationsprofil von dem mobilen Kommunikationsgerät, wobei die Profilanfrage eine elektronische Identifikation des elektronischen Identifikationsmoduls aufweist, einem Prozessor, welcher ausgebildet ist, auf der Basis der Profilanfrage eine Kommunikationspräferenz eines Benutzers des mobilen Kommunikationsgerätes zu bestimmen und einen ausgewählten Profilserver aus einer Mehrzahl von Profilservern mit Kommunikationsprofilen auszuwählen, welcher ein elektronisches Kommunikationsprofil für die Kommunikationspräferenz bereitstellt; und wobei die Kommunikationsschnittstelle ausgebildet ist, die empfangene Profilanfrage an den ausgewählten Profilservern weiterzuleiten.

In einer Ausführungsform ist die Kommunikationspräferenz ein Datenvolumen, eine Datenrate, Datenübertragung ohne Sprachübertragung, Sprachübertagung ohne Datenübertragung oder Datenübertragung mit Sprachübertragung.

In einer Ausführungsform ist der Prozessor ausgebildet, den Profilserver gemäß einer Auswahlregel auszuwählen.

In einer Ausführungsform umfasst die Auswahlregel eine geographische Abdeckung des Kommunikationsnetzwerks oder ein Preistarif für die Kommunikation in dem Kommunikationsnetzwerk.

In einer Ausführungsform enthält die Profilanfrage eine Angabe über die Kommunikationspräferenz, und wobei der Prozessor ausgebildet ist, die Kommunikationspräferenz aus der Profilanfrage zu extrahieren.

In einer Ausführungsform ist die Kommunikationsschnittstelle ausgebildet, eine Aktualisierungsanfrage zur Aktualisierung von Attributen über die Kommunikationsprofile an die Mehrzahl der Profilserver auszusenden und, ansprechend auf das Aussenden der Aktualisierungsanfrage, aktualisierte Attribute der Kommunikationsprofile über die Kommunikationsprofile von den Profilservern zu erhalten.

In einer Ausführungsform umfasst der Weiterleitungsserver einen Speicher, in welchem Attribute von Kommunikationsprofilen, insbesondere Angaben Kommunikationspräferenzen, gespeichert sind, und wobei der Prozessor ausgebildet ist, das Kommunikationsprofil auf der Basis eines dem Kommunikationsprofil zugeordneten Attributes auszuwählen, um den ausgewählten Profilserver auszuwählen.

Gemäß einem zweiten Aspekt betrifft die Erfindung ein Verfahren zum Handhaben einer Profilanfrage nach einem Kommunikationsprofil für ein elektronisches Teilnehmeridentifikationsmodul eines mobilen Kommunikationsgerätes für die Kommunikation über ein Kommunikationsnetzwerk, mit: Empfangen einer Profilanfrage nach dem Kommunikationsprofil von dem mobilen Kommunikationsgerät, wobei die Profilanfrage eine elektronische Identifikation des elektronischen Identifikationsmoduls aufweist; Bestimmen einer Kommunikationspräferenz eines Benutzers des mobilen Kommunikationsgerätes auf der Basis der Profilanfrage; Auswählen eines ausgewählten Profilservers aus einer Mehrzahl von Profilservern mit Kommunikationsprofilen, welcher ein elektronisches Kommunikationsprofil für die Kommunikationspräferenz bereitstellt; und Weiterleiten der empfangenen Profilanfrage an den ausgewählten Profilserver.

In einer Ausführungsform umfasst das Verfahren das Empfangen der weitergeleiteten Profilanfrage durch den ausgewählten Profilserver; und das Übermitteln des elektronischen Kommunikationsprofils von dem ausgewählten Profilserver zu dem mobilen Kommunikationsgerät.

Gemäß einem dritten Aspekt betrifft die Erfindung ein Subnetzwerk eines Kommunikationsnetzwerks mit einer Mehrzahl von Punkt-Zu-Punkt-Subnetzwerken, insbesondere ein Slice eines 5G-Kommunukationsnetzwerks, mit dem Weiterleitungsserver (100) nach dem ersten Aspekt, wobei der Weiterleitungsserver ausschließlich über das Subnetzwerk adressierbar ist.

In einer Ausführungsform ist das ein Punkt-zu-Punkt-Subnetzwerk, insbesondere zwischen dem mobilen Kommunikationsgerät und dem Weiterleitungsserver.

In einer Ausführungsform ist das Subnetzwerk ein Slice eines 5G-Kommunikatonsnetzwerks.

In einer Ausführungsform ist das Subnetzwerk ausgebildet, das Verfahren nach dem zweiten Aspekt auszuführen.

Weitere Ausführungsbeispiele der Erfindung werden Bezug nehmend auf die beiliegenden Figuren erläutert. Es zeigen:
- Fig. 1: einen Weiterleitungsserver; und
- Fig. 2: ein Subnetzwerk.

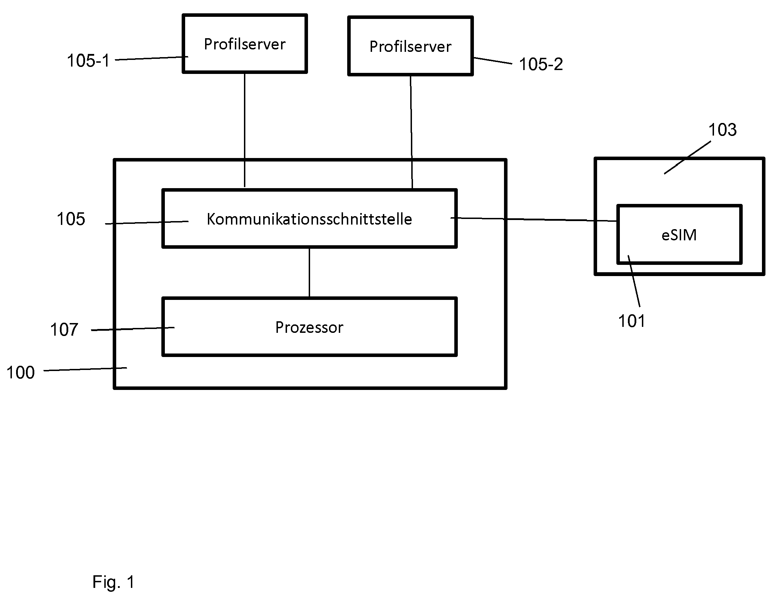

Fig. 1 zeigt einen Weiterleitungsserver 100 zur Handhabung einer Profilanfrage nach einem Kommunikationsprofil für ein elektronisches Teilnehmeridentifikationsmodul 101 eines mobilen Kommunikationsgerätes 103 für die Kommunikation über ein Kommunikationsnetzwerk, mit einer Kommunikationsschnittstelle 105 zum Empfangen einer Profilanfrage nach dem Kommunikationsprofil von dem mobilen Kommunikationsgerät 103, wobei die Profilanfrage eine elektronische Identifikation des elektronischen Identifikationsmoduls (101) aufweist, und einem Prozessor 107, welcher ausgebildet ist, auf der Basis der Profilanfrage eine Kommunikationspräferenz eines Benutzers des mobilen Kommunikationsgerätes zu bestimmen und einen ausgewählten Profilserver 105-1, 105-2 aus einer Mehrzahl von Profilservern 105-1, 105-2 mit Kommunikationsprofilen auszuwählen, welcher ein elektronisches Kommunikationsprofil für die Kommunikationspräferenz bereitstellt, wobei die Kommunikationsschnittstelle 105 ausgebildet ist, die empfangene Profilanfrage an den ausgewählten Profilserver 105-1, 105-2 weiterzuleiten.

Die Kommunikationsschnittstelle 105 ist beispielsweise eine Mobilfunkschnittstelle, insbesondere eine LTE- oder eine UMTS-Schnittstelle.

Die Profilserver 105-1, 105-2 sind beispielsweise SMDP+-Server.

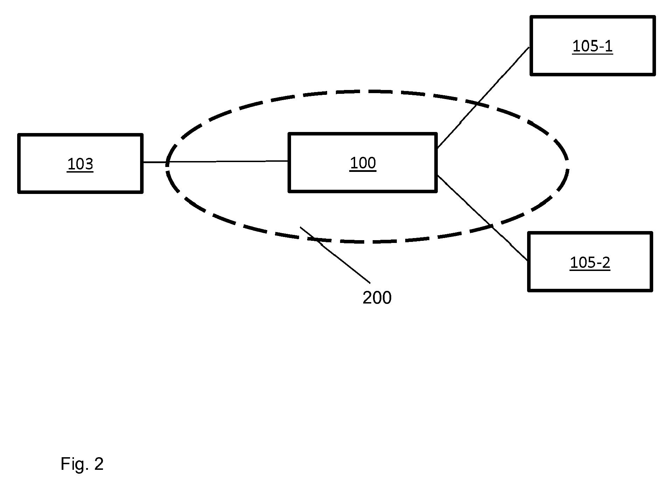

Fig. 2 zeigt ein Subnetzwerk 200 eines Kommunikationsnetzwerks mit einer Mehrzahl von Punkt-Zu-Punkt-Subnetzwerken, insbesondere ein Slice eines 5G-Kommunukationsnetzwerks, mit dem Weiterleitungsserver 100, wobei der Weiterleitungsserver 100 ausschließlich über das Subnetzwerk 200 adressierbar ist. Hierzu umfasst das Subnetzwerk beispielswiese eine eigene Subnetzwerk-Adresse oder Kennung.

Das Subnetzwerk 200 kann weitere Netzwerkentitäten wie einen Router oder einen Gateway aufweisen, welche in Fig. 2 nicht dargestellt sind.

## Patentansprüche

1. Weiterleitungsserver (100) zur Handhabung einer Profilanfrage nach einem Kommunikationsprofil für ein elektronisches Teilnehmeridentifikationsmodul (101) eines mobilen Kommunikationsgerätes (103) für die Kommunikation über ein Kommunikationsnetzwerk, mit:
einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Identifikationsmoduls (101) aufweist;
einem Prozessor (107), welcher ausgebildet ist, auf der Basis der Profilanfrage eine Kommunikationspräferenz eines Benutzers des mobilen Kommunikationsgerätes zu bestimmen und einen ausgewählten Profilserver (105-1, 105-2) aus einer Mehrzahl von Profilservern (105-1, 105-2) mit Kommunikationsprofilen auszuwählen, welcher ein elektronisches Kommunikationsprofil für die Kommunikationspräferenz bereitstellt; und wobei
die Kommunikationsschnittstelle (105) ausgebildet ist, die empfangene Profilanfrage an den ausgewählten Profilserver (105-1, 105-2) weiterzuleiten.

2. Weiterleitungsserver (100) nach Anspruch 1, wobei die Kommunikationspräferenz ein Datenvolumen, eine Datenrate, Datenübertragung ohne Sprachübertragung, Sprachübertagung ohne Datenübertragung oder Datenübertragung mit Sprachübertragung ist.

3. Weiterleitungsserver (100) nach einem der vorstehenden Ansprüche, wobei der Prozessor (107) ausgebildet ist, den Profilserver (105-1, 105-2) gemäß einer Auswahlregel auszuwählen.

4. Weiterleitungsserver (100) nach Anspruch 3, wobei die Auswahlregel eine geographische Abdeckung des Kommunikationsnetzwerks oder ein Preistarif für die Kommunikation in dem Kommunikationsnetzwerk umfasst.

5. Weiterleitungsserver (100) nach einem der vorstehenden Ansprüche, wobei die Profilanfrage eine Angabe über die Kommunikationspräferenz enthält, und wobei der Prozessor ausgebildet ist, die Kommunikationspräferenz aus der Profilanfrage zu extrahieren.

6. Weiterleitungsserver (100) nach einem der vorstehenden Ansprüche, wobei die Kommunikationsschnittstelle (105) ausgebildet ist, eine Aktualisierungsanfrage zur Aktualisierung von Attributen über die Kommunikationsprofile an die Mehrzahl der Profilserver (105-1, 105-2) auszusenden und, ansprechend auf das Aussenden der Aktualisierungsanfrage, aktualisierte Attribute der Kommunikationsprofile über die Kommunikationsprofile von den Profilservern (105-1, 105-2) zu erhalten.

7. Weiterleitungsserver (100) nach einem der vorstehenden Ansprüche, welcher einen Speicher umfasst, in welchem Attribute von Kommunikationsprofilen, insbesondere Angaben Kommunikationspräferenzen, gespeichert sind, und wobei der Prozessor (107) ausgebildet ist, das Kommunikationsprofil auf der Basis eines dem Kommunikationsprofil zugeordneten Attributes auszuwählen, um den Profilserver (105-1, 105-2) auszuwählen.

8. Verfahren zum Handhaben einer Profilanfrage nach einem Kommunikationsprofil für ein elektronisches Teilnehmeridentifikationsmodul (101) eines mobilen Kommunikationsgerätes (103) für die Kommunikation über ein Kommunikationsnetzwerk, mit:
Empfangen einer Profilanfrage nach dem Kommunikationsprofil von dem mobilen Kommunikationsgerät (103), wobei die Profilanfrage eine elektronische Identifikation des elektronischen Identifikationsmoduls (101) aufweist;
Bestimmen einer Kommunikationspräferenz eines Benutzers des mobilen Kommunikationsgerätes (103) auf der Basis der Profilanfrage;
Auswählen eines Profilservers (105-1, 105-2) aus einer Mehrzahl von Profilservern (105-1, 105-2) mit Kommunikationsprofilen, welcher ein elektronisches Kommunikationsprofil für die Kommunikationspräferenz bereitstellt; und
Weiterleiten der empfangenen Profilanfrage an den ausgewählten Profilserver (105-1, 105-2).

9. Verfahren nach Anspruch 8, mit:
Empfangen der weitergeleiteten Profilanfrage durch den ausgewählten Profilserver (105-1, 105-2); und
Übermitteln des elektronischen Kommunikationsprofils von dem ausgewählten Profilserver (105-1, 105-2) zu dem mobilen Kommunikationsgerät.

10. Subnetzwerk (200) eines Kommunikationsnetzwerks mit einer Mehrzahl von Punkt-Zu-Punkt-Subnetzwerken, insbesondere ein Slice eines 5G-Kommunukationsnetzwerks, mit:
dem Weiterleitungsserver (100) nach einem der Ansprüche 1 bis 8, wobei der Weiterleitungsserver (100) ausschließlich über das Subnetzwerk (200) adressierbar ist.

11. Subnetzwerk (200) nach Anspruch 10, das ein Punkt-zu-Punkt-Subnetzwerk ist.

12. Subnetzwerk (200) nach Anspruch 10 oder 11, das ein Slice eines 5G-Kommunikatonsnetzwerks ist.

13. Subnetzwerk (200) nach Anspruch 10, 11 oder 12, welches ausgebildet ist, das Verfahren nach Anspruch 8 oder 9 auszuführen.
